# EUROPÄISCHE PATENTANMELDUNG

(11) **EP 1 119 216 A1**
(43) Veröffentlichungstag der Anmeldung: **25.07.2001**
(21) Anmeldenummer: 00101182.4
(22) Anmeldetag: 21.01.2000
(51) Int. Cl.: H04Q 11/04

(54) **Verfahren und Vorrichtung zur Zugangssteuerung eines Kommunikationsnetzes**

(71) Anmelder: SIEMENS AKTIENGESELLSCHAFT, 80333 München (DE)
(72) Erfinder: Prehofer, Christian, Dr., 81477 München (DE); Charzinski, Joachim, Dipl.-Ing., 85764 Oberschleissheim (DE); Engel, Thomas, Dipl.-Math., 85579 Unterbiberg (DE); Sauerwein, Rainer, Dr., 82211 Herrsching (DE)

(57) **Zusammenfassung**

Von einem Zugangsknoten ZK eines Kommunikationsnetzes KN wird unter Berücksichtigung der Gesamtübermittlungskapazität G des Kommunikationsnetzes KN eine verfügbare Kapazität VK, die dem Zugangsknoten ZK zur Übermittlung von Verkehrsströmen VS an das Kommunikationsnetz KN zur Verfügung steht, zur Zugangssteuerung von Verkehrsströmen VS zu dem Kommunikationsnetz KN ermittelt. Insbesondere wird die verfügbare Kapazität VS erneut ermittelt, wenn die Routing-Informationen RI des Zugangsknotens ZK geändert werden. Mit einer derartigen Zugangssteuerung kann in einem verbindungslosen Kommunikationsnetz eine geforderte Dienstgüte garantiert werden.

## Beschreibung

Zeitgemäße paketorientierte Kommunikationsnetze - auch 'Datennetze' genannt - sind bisher im wesentlichen auf die Übermittlung von in der Fachwelt auch als 'Datenpaketströme' bezeichneten Paketströmen ausgelegt. Hierbei ist üblicherweise keine garantierte Übermittlungs-Dienstgüte erforderlich. So erfolgt die Übermittlung der Datenpaketströme z.B. mit schwankenden zeitlichen Verzögerungen, da die einzelnen Datenpakete der Datenpaketströme üblicherweise in der Reihefolge ihres Netzzugangs übermittelt werden, d.h. die zeitlichen Verzögerungen werden umso größer, je mehr Pakete von einem Datennetz zu übermitteln sind. In der Fachwelt wird die Übermittlung von Daten deshalb auch als Übermittlungsdienst ohne Echtzeitbedingungen bzw. als 'Non-Realtime-Service' bezeichnet.

Im Zuge der Konvergenz von leitungsorientierten Sprach- und paketorientierten Datennetzen werden zunehmend Echtzeitdienste bzw. 'Realtime-Services', d.h. Übermittlungsdienste unter Echtzeitbedingungen wie z.B. die Übermittlung von Sprach- oder Bewegtbildinformationen, ebenfalls in paketorientierten Kommunikationsnetzen realisiert, d.h. die Übermittlung der bisher üblicherweise leitungsorientiert übermittelten Echtzeitdienste erfolgt in einem konvergenten Sprach-Daten-Netz paketorientiert, d.h. in Paketströmen. Diese werden auch 'Echtzeitpaketströme' genannt. Hierbei ergibt sich das Problem, dass für eine mit einer leitungsorientierten Übermittlung qualitativ vergleichbare paketorientierte Übermittlung eines Echtzeitdienstes eine hohe Dienstgüte erforderlich ist. Insbesondere ist eine minimale - z.B. < 200 ms - Verzögerung ohne Schwankungen der Verzögerungszeit wichtig, da Echtzeitdienste im allgemeinen einen kontinuierlichen Informationsfluß erfordern und einen Informationsverlust, z.B. bedingt durch Paketverluste, nicht durch ein nochmaliges Übermitteln der verworfenen Pakete ausgleichen können. Da diese Dienstgüte-Anforderungen grundsätzlich für alle Kommunikationsnetze mit paketorientierter Übermittlung gelten, sind sie unabhängig von der konkreten Ausgestaltung eines paketorientierten Kommunikationsnetzes. Die Pakete können folglich als Internet-, X.25- oder Frame-Relay-Pakete, aber auch als ATM-Zellen ausgebildet sein. Datenpaketströme und Echtzeitpaketströme sind hierbei Ausführungsbeispiele von in Kommunikationsnetzen übermittelten Verkehrsströmen.

Eine Übermittlung von Sprach- und Bildinformationen in einem Sprach-Daten-Netz sollte üblicherweise mit einer garantierten Dienstgüte erfolgen, damit die Qualität der Sprach- und Bildübermittlung nicht abnimmt, wenn die Zahl der im Internet zu übermittelnden Pakete ansteigt. Bei der IETF (Internet Engineering Task Force) ist hierzu in Blake et. al., "An Architecture for Differentiated Services", RFC 2475, 1998, ftp://venera.isi.edu/in-notes/rfc2475.txt und in Nichols et. al, "Definition of the Differentiated Services Field (DS Field) in the IPv4 and IPv6 Headers", RFC 2474, 1998, ftp://venera.isi.edu/in-notes/rfc2474.txt vorgeschlagen, im bisher keine Dienstgüten garantierenden paketorientierten Internet mehrere Service-Klassen einzuführen. Ein derartiges Internet wird auch als 'DiffServ-Netz' bezeichnet. Hierbei werden die einzelnen Paketströme jeweils einer bestimmten Service-Klasse zugeordnet und von den Übermittlungsknoten des Internets entsprechend ihrer Service-Klasse gegenüber Paketen anderer Service-Klassen bevorzugt oder benachteiligt übermittelt. Somit kann die für die Echtzeitdienste geforderte Dienstgüte beispielsweise dadurch gewährleistet werden, dass die zugehörigen Echtzeitpaketströme einer Service-Klasse zugeordnet werden, die von den Knoten des Internets bevorzugt übermittelt wird - die Echtzeitpaketströme sind somit gegenüber den Datenpaketströmen priorisiert.

Durch die Bildung einer Klasse zur priorisierten Übermittlung wird innerhalb des Internets ein (virtuelles) separates Kommunikationsnetz zu Übermittlung der hochprioren Verkehrsströme mit einer separaten Gesamtübermittlungskapazität gebildet, die einen Teil der Gesamtübermittlungskapazität des Internets umfasst. Als Gesamtübermittlungskapazität eines aus Übermittlungsknoten und -wegen bestehenden Kommunikationsnetzes wird hierbei diejenige Kapazität angesehen, die für eine Übermittlung der gerade noch ohne Verkehrsverlust übermittelbaren Verkehrsströme erforderlich ist. In anderen Worten ausgedrückt bedeutet dies, dass kein weiterer Verkehrsstrom in dem Kommunikationsnetz ohne Verkehrsverlust übermittelt werden könnte. Die noch verfügbare Übermittlungskapazität einer gegebenen Route zwischen zwei Übermittlungknoten des Kommunikationsnetzes hängt demnach nicht nur von dem Verkehr ab, der direkt zwischen diesen beiden Übermittlungknoten übermittelt wird, sondern auch von demjenigen Verkehr, der in Folge einer Übermittlung entlang anderer Routen in dem Kommunikationsnetz zumindest teilweise entlang der gegebenen Route übermittelt wird.

Bei einer prioritätsgesteuerten Übermittlung ist grundsätzlich zumindest für den priorisierten Verkehr eine Netzzugangskontrolle erforderlich, da die geforderte Dienstgüte nur dann gewährleistet werden kann, wenn dem Kommunikationsnetz nicht mehr priorisierte Pakete zugeführt werden als von diesem maximal übermittelt werden können. Hierzu sind für das Internet mit mehreren Service-Klassen Netzübergangseinrichtungen - auch 'Edgedevices' bzw. aus Sicht des Kommunikationsnetzes auch 'Zugangsknoten' genannt - vorgeschlagen, von denen die Netzzugangskontrolle bewirkt wird. Hierbei können die Edgedevices
- das Volumen des dem Kommunikationsnetz durch Paketströme zugeführten Verkehrs steuern;
- Prioritätskennzeichen in den Paketen entsprechend der Priorität ihrer Paketströme setzen;
- Prioritätskennzeichen von Paketströmen kontrollieren und gegebenenfalls korrigieren, falls die Pakete bereits mit Prioritäten gekennzeichnet sind;
- die Übermittlungskapazität von priorisierten Paketströmen kontrollieren.

Die einem Edgedevice bekannten Übermittlungsknoten und -wege des Kommunikationsnetzes werden auch als 'Domäne' bezeichnet, der das Edgedevice zugeordnet ist. Ein Edgedevice kann auch mehreren Domänen zugeordnet sein.

Zur Steuerung des dem Kommunikationsnetz zugeführten Verkehrs wird in den Edgedevices üblicherweise ein fester Schwellwert eingestellt, den das Verkehrsvolumen nicht überschreiten sollte. Dieses Verfahren ist sehr einfach, aber unflexibel gegenüber Änderungen der Gesamtübermittlungskapazität des Kommuniaktionsnetzes.

Der Erfindung liegt somit die Aufgabe zugrunde, das Verfahren zur Steuerung des Zugangs zu einem Kommunikationsnetz zu verbessern. Die Aufgabe wird durch die Merkmale des Patentanspruchs 1 gelöst.

Der wesentliche Aspekt der Erfindung besteht in einer von einem Zugangsknoten des Kommunikationsnetzes bewirkten Zugangssteuerung von Verkehrsströmen zu einem Kommunikationsnetz in Abhängigkeit von einer verfügbaren Kapazität, die dem Zugangsknoten zur Übermittlung von Verkehrsströmen an das Kommunikationsnetz zur Verfügung steht. Für zumindest diesen Zugangsknoten wird von einer Zugangsfunktion unter Berücksichtigung der Gesamtübermittlungskapazität des Kommunikationsnetzes der Wert dieser verfügbaren Kapazität, die dem Zugangsknoten zur Übermittlung von Verkehrsströmen an das Kommunikationsnetz zur Verfügung steht, ermittelt und dem Zugangsknoten mitgeteilt. Einige wesentliche Vorteile der Erfindung seien im folgenden genannt:
- Die Zugangskontrolle kann flexibel auf Änderungen der Gesamtübermittlungskapazität angepasst werden.
- Es wird vermieden, dass dem Kommunikationsnetz bei einer deutlich verminderten Gesamtübermittlungskapazität mehr Verkehr zugeführt wird als übermittelt werden kann.
- Ein zumindest teilweiser Verlust von Verkehrsströmen wird vermieden.
- Da die Zugangskontrolle alleinig von dem Zugangsknoten bewirkt wird, ist in den restlichen Übermittlungsknoten des Kommunikationsnetzes keine direkte Kenntnis der zugeführten Verkehrsströme erforderlich. Hiermit ist der besonders schöne Vorteil verbunden, dass die Erfindung in verbindungslosen Kommunikationsnetzen, wie z.B. dem Internet, angewendet werden kann.

Gemäß einer Ausgestaltung des erfindungsgemäßen Verfahrens ist vorgesehen, dass bei einer Änderung der Gesamtübermittlungskapazität die verfügbare Kapazität erneut ermittelt wird - Anspruch 2. Somit wird die Zugangskontrolle bei Änderungen im Kommunikationsnetz angepasst. Insbesondere wird durch die unmittelbare Anpassung des Schwellwerts 'verfügbare Kapazität' die Zeitspanne minimiert, in der der Schwellwert ggf. nicht zu der geänderten Gesamtübermittlungskapazität passen könnte.

Entsprechend einer Weiterbildung des erfindungsgemäßen Verfahrens wird bei einem Kommunikationsnetz mit mehreren Übermittlungsknoten und -wegen die verfügbare Kapazität zumindest teilweise in Abhängigkeit von Informationen ermittelt, die dem Zugangsknoten für die Wegefindung im Kommunikationsnetz zur Verfügung stehen - Anspruch 3. Nach einer einer Ausgestaltung des erfindungsgemäßen Verfahrens sind die Informationen als die Übermittlungswege kennzeichnende Last- und/oder Kosteninformationen ausgebildet - Anspruch 4. Dies hat den Vorteil, dass eine Berücksichtigung der Gesamtübermittlungskapazität des Kommunikationsnetzes mit Hilfe von Informationen bewirkt wird, die in zeitgemäßen Zugangsknoten - z.B. den Edgedevices eines DiffServ-Netzes - üblicherweise hinterlegt sind.

Nach einer Variante des erfindungsgemäßen Verfahrens ist vorgesehen, dass bei einem Kommunikationsnetz mit mehreren Übermittlungsknoten und -wegen, dessen Gesamtübermittlungskapazität zumindest von den Übermittlungskapazitäten der Übermittlungswege abhängt, eine Änderung der Gesamtübermittlungskapazität in Folge der Änderung der Übermittlungskapazität eines der Übermittlungswege erkannt wird - Anspruch 5. Entsprechend einer Weiterbildung des erfindungsgemäßen Verfahrens ist vorgesehen, dass die Änderung der Übermittlungskapazität eines der Übermittlungswege dem Zugangsknoten entsprechend den Vorschriften eines Routing-Protokolls mitgeteilt wird - Anspruch 6. Derartige Änderungen werden durch die meisten zeitgemäßen Routing-Protokolle üblicherweise mitgeteilt. Die Erfindung kann somit vorteilhaft in vielen Kommunikationsnetzen ohne Anpassung des Routing-Protokolls angewendet werden.

Nach einer Variante des erfindungsgemäßen Verfahrens ist vorgesehen, dass die Zugangsfunktion in dem Zugangsknoten realisiert ist und lediglich die für diesen verfügbare Kapazität ermittelt - Anspruch 7. Somit wird die Zugangskontrolle alleinig von dem Zugangsknoten, d.h. ohne Mitwirkung der anderen Übermittlungsknoten des Kommunikationsnetzes, bewirkt. Somit bleibt die Funktionalität des Zugangsknoten auch dann erhalten, wenn wesentliche Teile des Kommunikationsnetzes aufgefallen sind.

Weitere vorteilhafte Ausgestaltungen der Erfindung ergeben sich aus den unter- oder nebengeordneten Ansprüchen.

Das erfindungsgemäße Verfahren wird im folgenden anhand einer Figur näher erläutert.

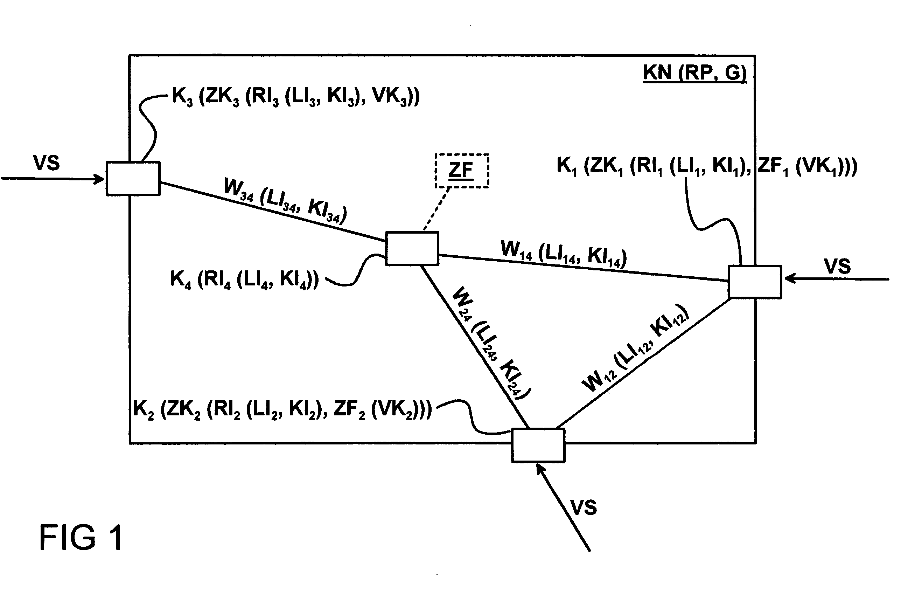

Dabei zeigt Figur 1 in einem Blockschaltbild beispielhaft ein Kommunikationsnetz KN mit einer Gesamtübermittlungskapazität G, in dem ein Routing-Protokoll RP zur Übermittlung von Routing-Informationen RI zur Anwendung kommt. Das Kommunikationsnetz KN umfasst vier übermittlungsknoten K, von denen der erste übermittlungsknoten K₁ als erster Zugangsknoten ZK₁, der zweite übermittlungsknoten K₂ als zweiter Zugangsknoten ZK₂ und der dritte übermittlungsknoten K₃ als dritter Zugangsknoten ZK₃ ausgebildet sind. Von den Zugangsknoten ZK werden jeweils Verkehrsströme VS an das Kommunikationsnetz KN übermittelt.

Die Übermittlungsknoten sind durch vier Übermittlungswege W₁₂, W₁₄, W₂₄ und W₃₄ miteinander verbunden, wobei durch die Indizes diejenigen Übermittlungsknoten Kᵢ und Kⱼ angezeigt werden, zwischen denen der Übermittlungsweg Wᵢⱼ vorgesehen ist. Die Übermittlungskapazität jedes der Übermittlungswege sei z.B. durch Lastinformationen LI und/oder Kosteninformationen KI gekennzeichnet.

In jedem der Übermittlungsknoten sind Routing-Informationen RI hinterlegt, die z.B. die Lastinformationen LI und/oder Kosteninformationen KI über die Übermittlungswege W umfassen. In den Zugangsknoten ZK₁ und ZK₂ ist zudem jeweils eine dezentrale, zugangsknotenindividuelle Zugangsfunktion ZF realisiert. Durch die Zugangsfunktionen ZF wird jeweils eine für den zugeordneten Zugangsknoten ZK verfügbare Kapazität VK ermittelt und diesem mitgeteilt. Alternativ ist eine zentrale Realisierung der Zugangsfunktion ZF angedeutet, die physikalisch über den Übermittlungsknoten K4 erreicht wird. Sie dient z.B. zur Ermittlung der für den Zugangsknoten K₃ verfügbaren Kapazität VK₃, die diesem entsprechend mitgeteilt und in deren Wert in dem Zugangsknoten ZK₃ hinterlegt wird.

Die Zugangsfunktion ZF kann beispielsweise zentral oder dezentral realisiert werden. Für das Ausführungsbeispiel sei angenommen, dass die Zugangsfunktion ZF zugangsknotenindividuell - d.h. dezentral - realisiert ist. Einer derart realisierten Zugangsfunktion ZF stehen üblicherweise keine globalen Informationen über alle in dem Kommunikationsnetz KN aktuell übermittelten Verkehrsströme VS zur Verfügung. Die für den zugeordneten Zugangsknoten ZK verfügbare Kapazität VK wird deshalb beispielsweise auf Basis von lokal verfügbaren Informationen ermittelt, aus denen Rückschlüsse über die aktuelle Verteilung der Verkehrsströme auf die Übermittlungsknoten K und Übermittlungswege W des Kommunikationsnetzes KN gezogen werden. Bei einer zugangsknotenindividuellen Realisierung der Zugangsfunktion ZF wird von dieser die ermittelte verfügbare Kapazität VK dem Zugangsknoten ZK mitgeteilt, indem der ermittelte Wert z.B. in einem Speichermedium des Zugangsknotens ZK hinterlegt wird. Bei einer zentralen Realisierung der Zugangsfunktion ZF wird der ermittelte Wert z.B. mit zumindest einer an den Zugangsknoten ZK übermittelten Nachricht, die z.B. als Paket ausgebildet ist, an den Zugangsknoten mitgeteilt.

Erfindungsgemäß erfolgt die Ermittlung der verfügbaren Kapazität VK beispielsweise unter Berücksichtigung der lokal hinterlegten Routing-Informationen RI. Mit besonders schönen Vorteilen ist eine Ausführung der Erfindung verbunden, bei der die verfügbare Kapazität VK jeweils dann erneut ermittelt wird, wenn die Routing-Informationen RI. Beispielsweise werden die Routing-Informationen RI üblicherweise von dem Zugangsknoten ZK immer dann angepasst, wenn sich die Übermittlungskapazität eines der Übermittlungswege W des Kommunikationsnetzes KN geändert hat.

Beispielsweise werden die Routing-Informationen RI entsprechend den Vorschriften eines in dem Kommunikationsnetz KN zur Anwendung kommenden Routing-Protokolls RP geändert. Die Aufgabe des Routing Protokolls RP besteht hierbei darin, die Routen in dem Kommunikationsnetz KN veränderten Bedingungen des Kommunikationsnetzes KN anzupassen. Dies sei am Beispiel eines paketorientierten, verbindungslosen Kommunikationsnetzes KN - z.B. einem Internet - kurz erläutert:
Auf Basis der Topologie des Kommunikationsnetzes KN wird in jedem Übermittlungsknoten K eine sog. 'Routing-Tabelle' zur Bestimmung des nächsten Übermittlungsknoten K für ein eingehendes Paket erstellt. Anhand der Zieladresse eines Pakets wird in der Tabelle der nächste Übermittlungsknoten K bestimmt. Da die Routing-Tabellen mit Hilfe des Routing Protokolls RP üblicherweise netzweit synchronisiert wird, erreicht jedes Paket i.A. sein Ziel.

Ein Ausfall eines Übermittlungsweges W wird entsprechend den Vorschriften des Routing-Protokolls RP den Übermittlungsknoten K des Kommunikationsnetzes KN mitgeteilt. Von diesen werden daraufhin üblicherweise angepasste Routing-Tabellen gebildet.

Beispiele für Routing-Protokolle sind OSPF (Open Shortest Path First), RIP (Routing Information Protocol) oder IS-IS (Intermediate System to Intermediate System). Von jedem der Routing-Protokolle RP werden einem Zugangsknoten ZK üblicherweise unterschiedliche Informationen über das Kommunikationsnetz KN zur Verfügung gestellt. Beispielsweise hängen die einem Zugangsknoten ZK zur Verfügung stehenden Routing-Informationen RI davon ab, welches Routing-Protokoll RP zur Anwendung kommt. Im einfachsten Fall wird nur die Topologie des Kommunikationsnetzes mitgeteilt. Von den Zugangsknoten ZK werden gemäß dieser Routing-Information Routen mit einer bestimmten Metrik (z.B. Zahl der Übermittungsknoten K auf einer Route) ermittelt. Es können aber auch andere Informationen, wie Kapazität der Übermittlungswege W, Kosteninformationen KI oder Lastinformation LI mitgeteilt werden.

Von einem Zugangsknoten ZK kann somit die Zugangskontrolle von Verkehrsströmen VS zu dem Kommunikationsnetz KN auf Basis verschiedener Kriterien durchgeführt werden. Dazu wird üblicherweise die für die Übermittlung der von dem Zugangsknoten ZK dem Kommunikationsnetz KN zugeführten Verkehrsströme VS erforderlichen Kapazitäten addiert und mit der verfügbaren Kapazität VK verglichen. Die summierten erforderlichen Kapazitäten sollen üblicherweise die verfügbare Kapazität VK nicht überschreiten. In diesem Fall wird die verfügbare Kapazität auch 'Limit' oder 'Bandbreitenlimit' genannt. Ein bestimmter Verkehrsstrom VSᵢ wird hierbei i.A. entweder zugelassen - d.h. übermittelt - oder abgelehnt. Von dem Zugangsknoten ZK werden z.B. Information über die Topologie des Kommunikationsnetz KN, die Übermittlungskapazitäten der Übermittlungswege W des Kommunikationsnetz KN, oder typische Lastsituationen in dem Kommunikationsnetz KN berücksichtigt. Je nachdem wie detailliert das Kommunikationsnetz KN in Abhängigkeit von den zur Verfügung stehenden Routing-Informationen RI betrachtet wird, gibt es verschiedene Möglichkeiten, die verfügbare Kapazität VK zur Übermittlung von Verkehrsströmen VS zu ermitteln:
1. Pauschales Limit VK für die kumulierten erforderlichen Kapazitäten aller Verkehrsströme VS, die von einem Zugangsknoten ZK an das Kommunikationsnetz KN übermittelt werden.
2. Je ein Bandbreitenlimit VK für jede Route zu anderen Übermittlungsknoten K des Kommunikationsnetzes KN.
3. Je ein Bandbreitenlimit VK für jeden einzelnen Übermittlungsweg W im Kommunikationsnetz KN, entlang der zumindest eine Route verläuft.

Diese Limits VK gelten bei dezentraler Realisierung der Zugangsfunktion ZF üblicherweise jeweils nur für den Verkehr über einen Zugangsknoten ZK. Bei Realisierung einer zentralen Zugangsfunktion ZF könnten die Limits auch global geprüft werden.

Gemäß einer mit besonders schönen Vorteilen verbundenen Variante der Erfindung wird die Zugangskontrolle auf Basis der über das Routing-Protokoll RP mitgeteilten Informationen angepasst. Bei Änderung des Zustands des Kommunikationsnetzes KN - z.B. bei geänderten Wegen in dem Kommunikationsnetz KN in Folge eines Ausfalls oder geänderter Lastsituation eines Übermittlungswegs W oder auch geänderter Kapazität eines Wegs (z.B. bei ATM, ISDN) - wird somit die Zugangskontrolle des Zugangsknoten ZK unmittelbar entsprechend angepasst, indem die verfügbare Kapazität VK erneut ermittelt wird. Diese Anpassung erfolgt bei Wegfall eines Übermittlungswegs W - z.B. des Übermittlungswegs U₂₄ - und entsprechende Neubestimmung der Wege für die ausgeführten drei Szenarien beispielsweise durch Ermittlung neuer Bandbreitenlimits:
1. In dem Zugangsknoten ZK ist eine vordefinierte Tabelle (oder Berechnungsformel) zur Bestimmung eines neuen Limits VK vorgesehen. Das neue Limit VK wird der Tabelle unter Berücksichtigung der verfügbaren Übermittlungswege W entnommen.
2. Von dem Zugangsfunktion ZF wird des Bandbreitenlimits VK aller Routen durch eine neue Aufteilung der verfügbare Kapazität VK des Zugangsknotens ZK neu berechnet. Die Übermittlungskapazität der weggefallenen Routen soll beispielsweise als verloren betrachtet werden. Überlappen die neuen Routen mit alten, so müssen die bisherigen Kontingente auf die Routen neu aufgeteilt werden. Fällt z.B. der Übermittlungsweg W₂₄ aus, führt die neue Route von dem Übermittlungsknoten K₂ zu dem Übermittlungsknoten K₃ über den Übermittlungsknoten K₁. Da diese neue Route nun mit der Route zu dem Übermittlungsknoten K₁ überlappt, wird für diese beiden Routen die verfügbare Kapazität VK z.B. wie folgt neu aufgeteilt: Waren für beide Routen ursprünglich jeweils 100 Verkehrsströme VS zugelassen, so werden nach der Neuaufteilung z.B. je Route jeweils 50 Verkehrsströme VS zugelassen.
3. Grundsätzlich wäre keine Neuberechnung der Bandbreitenlimits VK für einzele Übermittlungswege W erforderlich. Da in Folge des Ausfalls von Übermittlungswegen W üblicherweise eine Änderung der Routen in dem Kommunikationsnetz KN erforderlich ist, sollte überprüft werden, ob entlang der einzelnen Übermittlungswege W zusätzliche Routen verlaufen. In diesem Fall wäre i.A. eine Anpassung der Bandbreitenlimits VK erforderlich. In obigem Beispiel sind vor Ausfall des Übermittlungswegs W₂₄ auf dem Übermittlungsweg W₁₂ 100 Verkehrsströme VS zugelassen. Nach dem Ausfall ist zu berücksichtigen, daß zusätzliche Routen entlang dem Übermittlungsweg W₁₂ verlaufen.

Im Fall von Änderungen im Kommunikationsnetz KN kann die Neuberechnung der Zugangsfunktion ZF ergeben, daß an das Kommunikationsnetz KN mehr Verkehrsströme übermittelt werden als entsprechend der neu berechneten verfügbaren Kapazität VK zulässig wäre. Wenn in Folge dessen die maximal Zahl von Verbindungen im Netz übschritten wird, kommt es zu Überlast und teilweisem Verlust von Verkehr. Daher wird die Übermittlung eines Teil der Verkehrsströme VS aufgrund der Neuberechnung beendet. Hierfür sind grundsätzlich zwei Varianten vorgesehen:
1. Es wird sofort die Übermittlung mehrere Verkehrsströme VS beendet, so daß die verbleibenden Verkehrsströme VS nicht von der Überlast betroffen sind.
2. Es wird langsam eine Übermittlung nach der anderen terminiert und somit gewartet, ob sich einige der Verkehrsströme VS in Folge der Überlast von selbst terminieren.

Eine Entscheidung zwischen den genannten Varianten hängt z.B. davon ab wie schnell von dem Zugangsknoten ZK und den Verkehrsströme VS reagiert werden kann bzw. reagiert wird. Die zwei Variante wird im Zweifelsfall auf Grund folgender Überlegung vorgezogen: Viele Applikationen verwenden üblicherweise zumindest zwei zusammengehörende Verkehrsströme VS, die typischerweise in gegensätzlicher Richtung verlaufen (sog. bi-direktionale Verbindungen). Falls hierbei einer der Verkehrsströme VS terminiert wird, wird von der Applikation üblicherweise mit einem gewissen zeitlichen Versatz auch der zugehörige zweite Verkehrsstrom VS terminiert.

Abschließend sei betont, dass die Erfindung in jedem beliebigen Kommunikationsnetz KN angewandt werden kann. Beispielsweise ist eine Anwendung vorgesehen in
- Weitverkehrs-Kommunikationsnetzen KN, wie z.B. dem Internet,
- lokalen Kommunikationsnetzen KN - auch 'Local Area Network' bzw. 'LAN' genannt,
- virtuellen Kommunikationsnetzen KN, wie z.B. einem Virtual Private Network - auch 'VPN' genannt - oder dem eingangs beschriebenen priorisierten Teilnetz eines DiffServ-Netzes.

## Patentansprüche

1. Verfahren zur Zugangssteuerung eines Kommunikationsnetzes (KN) mit folgenden Schritten:
- von einer Zugangsfunktion (ZF) des Kommunikationsnetzes (KN) wird unter Berücksichtigung der Gesamtübermittlungskapazität (G) des Kommunikationsnetzes (KN) für zumindest einen Zugangsknoten (ZK) eine verfügbare Kapazität (VK) ermittelt, die diesem zur Übermittlung von Verkehrsströmen (VS) an das Kommunikationsnetz (KN) zur Verfügung steht,
- von der Zugangsfunktion (ZF) wird dem Zugangsknoten (ZK) die verfügbare Kapazität (VK) mitgeteilt,
- von dem Zugangsknoten (ZK) wird der Zugang von Verkehrsströmen (VS) zu dem Kommunikationsnetz (KN) in Abhängigkeit von der verfügbaren Kapazität (VK) gesteuert.

2. Verfahren nach Anspruch 1,
**dadurch gekennzeichnet**,
dass bei einer Änderung der Gesamtübermittlungskapazität (G) die verfügbare Kapazität (VK) erneut ermittelt wird.

3. Verfahren nach einem der Ansprüche 1 oder 2,
**dadurch gekennzeichnet**,
dass bei einem Kommunikationsnetz (KN) mit mehreren Übermittlungsknoten (K) und -wegen (W) die verfügbare Kapazität (VK) zumindest teilweise in Abhängigkeit von Informationen (RI) ermittelt wird, die dem Zugangsknoten (ZK) für das Routing im Kommunikationsnetz (KN) zur Verfügung stehen.

4. Verfahren nach Anspruch 3,
**dadurch gekennzeichnet**,
dass die Informationen (RI) als die Übermittlungswege (UW) kennzeichnende Lastinformationen (LI) und/oder Kosteninformationen (KI) ausgebildet sind.

5. Verfahren nach einem der vorhergehenden Ansprüche,
**dadurch gekennzeichnet**,
dass bei einem Kommunikationsnetz (KN) mit mehreren Übermittlungsknoten (K) und -wegen (W), dessen Gesamtübermittlungskapazität (G) zumindest teilweise von den Übermittlungskapazitäten der Übermittlungswege (W) abhängt, eine Änderung der Gesamtübermittlungskapazität (G) in Folge einer Änderung der Übermittlungskapazität eines der Übermittlungswege (W) erkannt wird.

6. Verfahren nach Anspruch 5,
**dadurch gekennzeichnet**,
dass die Änderung der Übermittlungskapazität eines der Übermittlungswege (W) dem Zugangsknoten (ZK) entsprechend den Vorschriften eines Routing-Protokolls (RP) mitgeteilt wird.

7. Verfahren nach einem der vorhergehenden Ansprüche,
**dadurch gekennzeichnet**,
dass die Zugangsfunktion (ZF) in dem Zugangsknoten (ZK) realisiert ist und lediglich die für diesen verfügbare Kapazität (VK) ermittelt.

8. Vorrichtung zur Durchführung eines Verfahrens nach einem der vorhergehenden Ansprüche.
